# EUROPEAN PATENT APPLICATION

(11) **EP 2 472 751 A1**
(43) Date of publication of application: **04.07.2012**
(21) Application number: 11155768.2
(22) Date of filing: 24.02.2011
(51) Int. Cl.: H04H 20/71, H04N 21/61, H04N 21/2381

(54) **Multiplexer and receiver for dvb-t2/s2/c2 broadcasting system**

(30) Priority: 31.12.2010 KR 20100139836
(71) Applicant: Korea Electronics Technology Institute, Gyeonggi-do 463-816 (KR)
(72) Inventor: Baik, Jong Ho, 511-1604, Gyeonggi-dong (KR); Seo, Jeong Wook, 463-817, Gyeonggi-do (KR); Wee, Jung Wook, 305-1401, Seongbuk-gu (KR); Jeon, Won Gi, 706-803, Gyeonggi-do (KR); Park, Kyung Won, 109-502, Seoul (KR)
(74) Representative: Molnia, David

(57) **Abstract**

The present invention relates to a digital video broadcasting (DVB) terrestrial broadcast (DVB-T2) which is a 2-generation European digital broadcasting standard, a satellite broadcast (DVB-S2), and a cable broadcast (DVB-C2), and more particularly, to a convergent multiplexer structure and a variable receiver structure and transmission and reception methods thereof capable of supporting all the standards.

The present invention provides a multiplexer having an integrated structure capable of processing all of terrestrial broadcasting, satellite broadcasting, and cable broadcasting and a variable receiver structure capable of viewing all of the terrestrial broadcasting, satellite broadcasting, and cable broadcasting.

## Description

### CROSS-REFERENCE TO RELATED APPLICATIONS

This application claims priority under 35 U.S.C. §119 to Korean Patent Application No. 10-2010-0139836, filed on December 31th, 2010, in the Korean Intellectual Property Office, the disclosure of which is incorporated herein by reference in its entirety.

### TECHNICAL FIELD

The present invention relates to a digital video broadcasting (DVB) terrestrial broadcast (DVB-T2) which is a 2-generation European digital broadcasting standard, a satellite broadcast (DVB-S2), and a cable broadcast (DVB-C2), and more particularly, to a convergent multiplexer structure and a variable receiver structure and transmission and reception methods thereof capable of supporting all the standards.

### BACKGROUND

In the related art, since multiplexers are implemented for each one of DVB-S2, DVB-T2, and DVB-C2 standards, a multibroadcasting provider who dispatches broadcasts of various standards should purchase an expensive device for each standard and provide a service.

Further, a user (viewer) must purchase at least 3 receivers(set-top box) which for each standard in order to watch the DVB-S2, DVB-T2, and DVB-C2 broadcasts, individually.

### SUMMARY

An exemplary embodiment of the present invention provides a DVB 2.0 convergent multiplexer including: an audio/video encoder encoding DVB 2.0 audio and video streams; a DVB 2.0 input pre-processor receiving a signal from the audio/video encoder and converting the received signal into a PLP signal; a DVB 2.0 mode adaptation processor fragmentizing the PLP signal to generate a BB frame; a DVB 2.0 stream adaptation processor fixing the length of the BB frame and randomizing the BB frame; an MI processor transmitting the BB frame according to one or more standards; a plurality of standard baseband modules each of which encoding and modulating the BB frame transmitted from the MI processor according to the one of the standards; a plurality of standard RF module each of which transitioning the BB frame to a transmission frequency according to one of the standards and transmitting the BB frame; and a multiplexer controller detemining which standard is selcected for the DVB 2.0 audio and video streams, and controlling the DVB 2.0 input pre-processor, the DVB 2.0 mode adaptation processor, the DVB 2.0 stream adaptation processor, and the MI processor to perform processing adapted to the selected standard.

Other features and aspects will be apparent from the following detailed description, the drawings, and the claims.

### BRIEF DESCRIPTION OF THE DRAWINGS

FIG. 1 is a diagram showing a DVB 2.0 (DVB-T2/S2/C2) convergent multiplexer structure according to an exemplary embodiment of the present invention.

FIG. 2 is a flowchart showing a processing process of a DVB 2.0 (DVB-T2/S2/C2) convergent multiplexer structure according to an exemplary embodiment of the present invention.

FIG. 3 is a diagram showing a DVB 2.0 (DVB-T2/S2/C2) variable receiver structure according to an exemplary embodiment of the present invention.

FIG. 4 is a flowchart showing a processing process of a DVB 2.0 (DVB-T2/S2/C2) variable receiver according to an exemplary embodiment of the present invention.

### DETAILED DESCRIPTION OF EMBODIMENTS

Hereinafter, exemplary embodiments will be described in detail with reference to the accompanying drawings. Throughout the drawings and the detailed description, unless otherwise described, the same drawing reference numerals will be understood to refer to the same elements, features, and structures. The relative size and depiction of these elements may be exaggerated for clarity, illustration, and convenience. The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

The present invention provides a multiplexer structure converging a common function processed by a multiplexer through analysis of DVB-T2, DVB-S2, and DVB-C2 standards and a variable receiver structure incorporating a common function processed by a receiver.

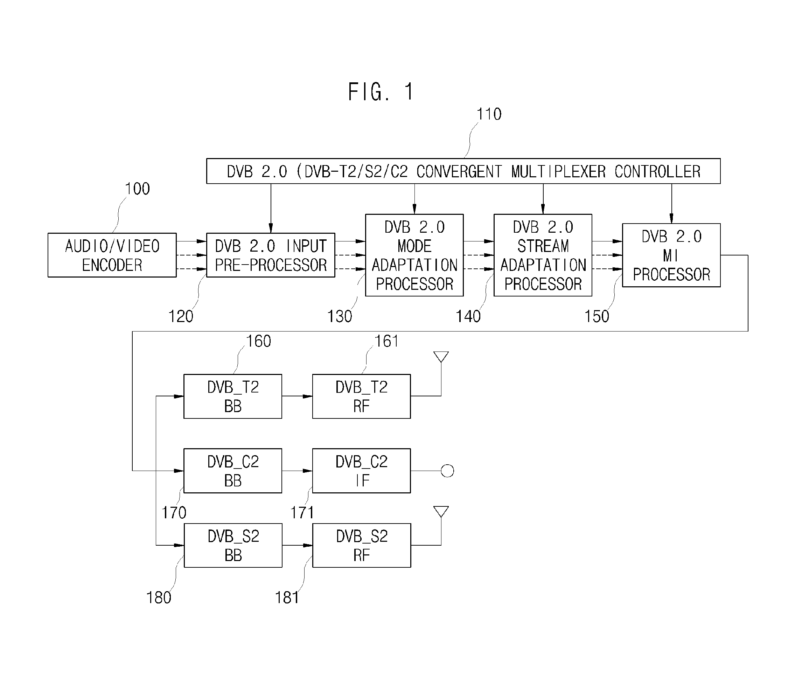

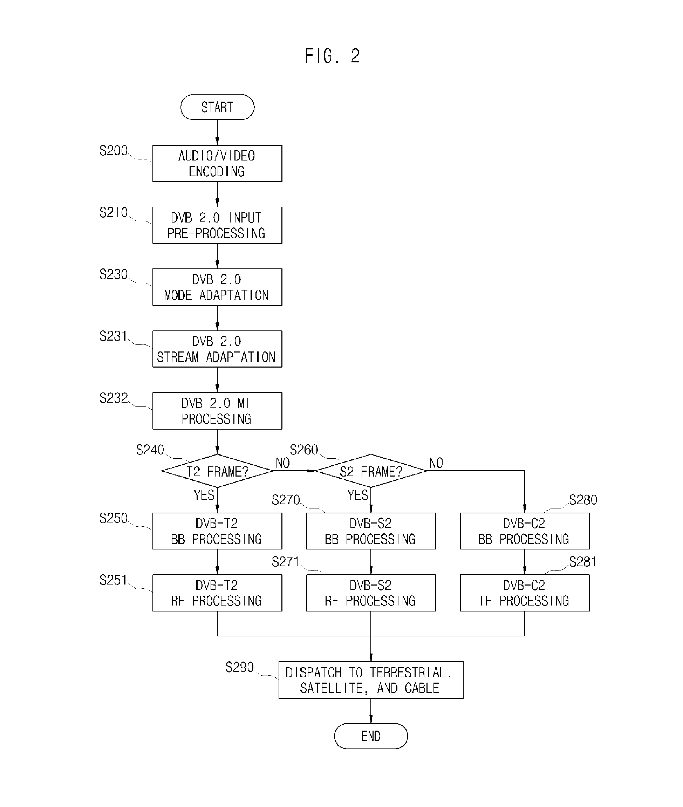

FIG. 1 shows a structure of a DVB 2.0 (DVB-T2/S2/C2) convergent multiplexer structure according to an exemplary embodiment of the present invention and FIG. 2 shows a processing process of a DVB 2.0 convergent multiplexer.

As shown in FIG. 1, the DVB 2.0 (DVB-T2/S2/C2) convergent multiplexer according to the exemplary embodiment of the present invention includes an audio/video encoder 100, a DVB 2.0 convergent multiplexer controller 110, a DVB 2.0 input pre-processor 120, a DVB 2.0 mode adaptation processor 130, a DVB 2.0 stream adaptation processor 140, a DVB 2.0 modulator interface (MI) processor 150, a DVB-T2 BB module 160, a DVB-C2 BB module 170, a DVB-S2 BB module 180, a DVB-T2 RF module 161, a DVB-C2 inter-frequency (IF) module 171, and a DVB-S2 RF module 181.

The audio/video encoder 100 generates a transport stream (TS), generic continuous stream (GCS), generic fixed-length packetized stream (GFPS), or generic stream encapsulation (GSE) input signal.

The DVB 2.0 convergent multiplexer controller 110 detemines or idenfy which standard DVB-T2, DVB-S2, or DVB-C2) is selcected for the DVB 2.0 audio and video streams and sets functions required for one or more selected standards to the DVB 2.0 pre-processor 120, the DVB adaption processor 130, the DVB 2.0 stream adaptation processor 140, and the DVB 2.0 modulator interface (MI) processor 150.

The DVB 2.0 convergent multiplexer controller 110 may support even multiple transmission of dispatching two or more broadcastings of the terrestrial, satellite, and cable broadcastings as well as single transmission of dispatching only one broadcasting of terrestrial, satellite and cable broadcastings.

The DVB 2.0 input pre-processor 120 converts the input signal into a physical layer pipe (PLP) signal.

The DVB 2.0 mode adaptation processor 130 fragmentizes a PLP signal and arrays the fragmentized signals in a data field of a based-band (BB) frame and inserts BB header information into a head of the data field.

To enable this, the DVB 2.0 mode adaptation processor 130 may include an input interface and a functional block (not shown) for inserting a BB header and additionally include an input stream synchronizer, a null packet deleter, and a CRC-8 encoder as necessary and may allow them to perform their corresponding functions.

The DVB 2.0 stream adaptation processor 140 inserts bit 0 after the data field of the BB frame or inserts in-band signaling information to fix the length of the BB frame and randomize the BB frame through BB scrambling. The DVB 2.0 stream adaptation processor 140 may further include a scheduler as necessary.

The DVB 2.0 modulator interface (MI) processor 150 transmits the BB frame for each of the DVB-T2 BB module 160, the DVB-C2 BB module 170, and the DVB-S2 BB module 180. The DVB-T2 BB module 160, the DVB-C2 BB module 170, and the DVB-S2 BB module 180 may be located locally or remotely.

When the DVB-T2 BB module 160, the DVB-C2 BB module 170, and the DVB-S2 BB module 180 receive the corresponding BB frame, the DVB-T2 BB module 160, the DVB-C2 BB module 170, and the DVB-S2 BB module 180 start their operations and perform each baseband transmission signal processing (encoding, interleaving, modulating, or the like) for transmitting the BB frame for each standard.

When the DVB-T2 RF module 161, the DVB-C2 inter-frequency (IF) module 171, and the DVB-S2 RF module 181 receive the corresponding BB frame which is subjected to transmission signal processing, the DVB-T2 RF module 161, the DVB-C2 inter-frequency (IF) module 171, and the DVB-S2 RF module 181 start their operations, and each module transitions and transmits the signal acquired through baseband signal processing to the corresponding frequency.

Referring to FIG. 2, a multiplexing process will be described hereinafter.

First, audio/video encoding is performed (S200) and it is verified whether one or more of DVB 2.0 (DVB-T2/S2/C2) standards is multiplexed (S210) and if so, DVB 2.0 input pre-processing of generating a PLP signal is performed in operation S230.

Thereafter, DVB 2.0 mode adaptation processing of fragmentizing the PLP signal, arranging the fragmentized signals in a data field of a BB frame, and inserting BB header information into a head of the data field is performed (S231).

Thereafter, DVB 2.0 stream adaptation processing of fixing the length of the BB frame and randomizing the BB frame through BB scrambling is performed (S232).

The BB frame which is subjected to DVB 2.0 stream adaptation processing is transmitted to one or more of the DVB-T2 BB module, the DVB-S2 BB module and the DVB-C2 BB module for each corresponding standard by a DVB 2.0 modulator interface (MI) processor 150 (S233).

The transmitted BB frame is transitioned to a frequency through baseband processing for corresponding standard to be dispatched to terrestrial, satellite, or cable broadcasting (S240 to S290).

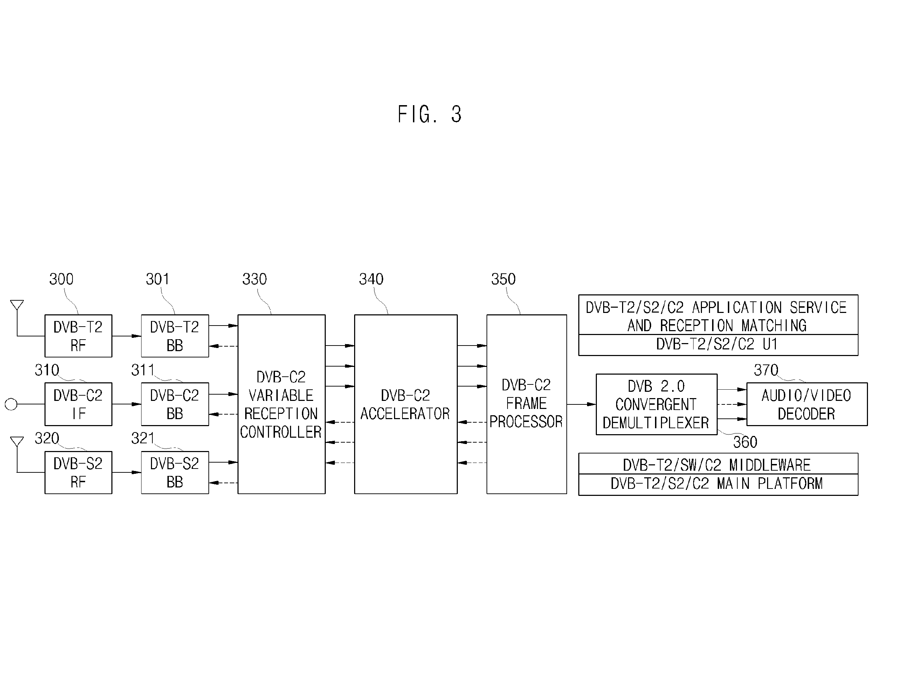

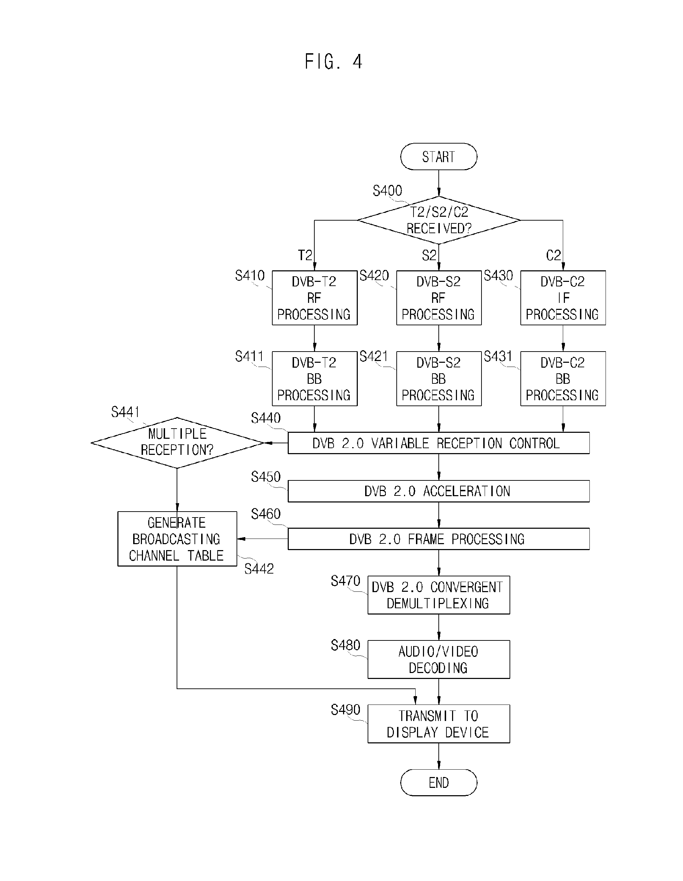

FIG. 3 shows a structure of a DVB 2.0 (DVB-T2/S2/C2) variable receiver structure according to an exemplary embodiment of the present invention and FIG. 4 shows a processing process of a DVB 2.0 variable receiver.

A function of each of blocks shown in FIG. 3 will be described below.

When a dispatch signal is present for each standard, a DVB-T2 RF module 300, a DVB-C2 IF module 310, or a DVB-S2 RF module 320 receives the dispatch signal.

When a DVB-T2 BB module 301, a DVB-C2 BB module 311 and a DVB-S2 BB module 321 receive the corresponding dispatch signals from the DVB-T2 RF module 300, the DVB-C2 IF module 310, and the DVB-S2 RF module 320, the modules start their operations and performs baseband reception signal processing (synchronizing, channel estimating, equalizing, deinterleaving, or the like) for each standard.

A DVB 2.0 variable reception controller 330 controls the operations of the DVB-T2 BB module 301, the DVB-C2 BB module 311, and the DVB-S2 BB module 321 to enable single reception (viewing only any one of terrestrial, satellite, and cable broadcastings) and multiple reception (viewing two or more broadcastings of terrestrial, satellite, and cable broadcastings).

Further, in the case of the multiple reception, a broadcasting channel table may be generated so as to quickly transition heterogeneous broadcasting channels to each other and information on broadcasting channels is received from a DVB 2.0 frame processor 350. The variable reception controller 330 generates the broadcasting channel table. Or other embodiments, the frame processor 350 or other devices can generate the table under the control by the variable reception controller 330.

A DVB 2.0 accelerator 340 performs low-density parity check () and Bose, Chaudhuri and Hocquenghem (BCH) decoding for DVB-T2/S2/C2 and may additionally perform fast Fourier transform for DVB-T2/S2/C2.

A DVB 2.0 frame processor 350 processes a data filed by using header information of the corresponding BB frame among DVB-T2/S2/C2.

A DVB 2.0 converter demultiplexer 360 regenerates a signal of TS, GCS, GFPS, or GSE received from a transmitter by performing reverse processes of a DVB 2.0 stream adaptation processor 130, a DVB 2.0 mode adaptation processor 140, and a DVB 2.0 input pre-processor 150.

An audio/video decoder 370 reproduces an audio/video signal from the signal of TS, GCS, GFPS, or GSE.

Referring to FIG. 4, a receiving process will be described hereinafter.

When a receiver receives one or more of DVB-T2/S2/C2 signals, the received signal is subjected to reception processing and baseband processing for each standard (S400 to S431).

The signal which is subjected to completion of baseband processing is processed to undergo single reception and multiple reception by the variable reception controller 330 (S440). Further, in the case of the multiple reception (S441), a broadcasting channel table is generated so as to quickly transition heterogeneous broadcasting channels to each other (S442).

The received signal is decoded and the data field is processed and thereafter, the signal of TS, GCS, GFPS, or GSE is regenerated from a dispatch signal, and as a result, the audio/video signal is reproduced (S450 to S490).

According to the exemplary embodiments of the present invention, a multi-broadcasting provider provides all of satellite, terrestrial, and cable broadcasting services with one multiplexer.

A receiver (set-top box) provider can acquire an opportunity to enter satellite, terrestrial, and cable broadcasting markets through one receiver.

A number of exemplary embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A DVB 2.0 convergent multiplexer, comprising:
an audio/video encoder encoding DVB 2.0 audio and video streams;
a DVB 2.0 input pre-processor receiving a signal from the audio/video encoder and converting the received signal into a PLP signal;
a DVB 2.0 mode adaptation processor fragmentizing the PLP signal to generate a BB frame;
a DVB 2.0 stream adaptation processor fixing the length of the BB frame and randomizing the BB frame;
an MI processor transmitting the BB frame according to one or more standards;
a plurality of standard baseband modules each of which encoding and modulating the BB frame transmitted from the MI processor according to the one of the standards;
a plurality of standard RF module each of which transitioning the BB frame to a transmission frequency according to one of the standards and transmitting the BB frame; and
a multiplexer controller detemining which standard is selcected for the DVB 2.0 audio and video streams, and controlling the DVB 2.0 input pre-processor, the DVB 2.0 mode adaptation processor, the DVB 2.0 stream adaptation processor, and the MI processor to perform processing adapted to the selected standard.

2. The DVB 2.0 convergent multiplexer of claim 1, wherein the multiplexer controller supports single transmission and multiple transmission.

3. The DVB 2.0 convergent multiplexer of claim 1, wherein the mode adaptation processor includes an input stream synchronizer, a null packet deleter, and a CRC-8 encoder.

4. The DVB 2.0 convergent multiplexer of claim 1, wherein the stream adaptation processor further includes a scheduler.

5. A DVB 2.0 variable receiver, comprising:
a plurality of DVB standard receiving modules each of which receiving dispatch signals one of DVB-T2 RF, DVB-S2 RF, DVB-C2 IF standards;
a plurality of DVB 2.0 standard baseband processing modules each of which performing baseband reception signal processing of the received dispatch signals;
a variable reception controller controlling the plurality of DVB 2.0 standard baseband processing modules to enable single reception or multiple reception;
an accelerator extracting a BB frame by decoding the baseband processed signal;
a frame processor processing a data field by verifying whether the decoded baseband processed signal is a signal of DVB-T2/S2/C2 by using header information of the BB frame;
a convergent demultiplexer demultiplexing the signal processed by the frame processor; and
an audio/video encoder reproducing the signal demultiplexed by the convergent demultiplexer.

6. The DVB 2.0 variable receiver of claim 5, wherein the variable reception controller generates a broadcasting channel table.

7. The DVB 2.0 variable receiver of claim 5, wherein the accelerator performs FFT of the signal for the DVB-T2/C2 standard.

8. The DVB 2.0 variable receiver of claim 5, wherein the frame processor extracts broadcasting channel information for generating the broadcasting channel table.
